(19) Europäisches Patentamt
European Patent Office
Office européen des brevets

(11) **EP 4 580 188 A1**

(12) **EUROPEAN PATENT APPLICATION**
published in accordance with Art. 153(4) EPC

(43) Date of publication:
**02.07.2025 Bulletin 2025/27**

(21) Application number: 23857691.2

(22) Date of filing: **22.08.2023**

(51) International Patent Classification (IPC):
*H04N 19/60* (2014.01)    *H04N 19/13* (2014.01)
*H04N 19/597* (2014.01)    *H04N 19/184* (2014.01)
*H04N 19/70* (2014.01)

(52) Cooperative Patent Classification (CPC):
H04N 19/13; H04N 19/184; H04N 19/597;
H04N 19/60; H04N 19/70

(86) International application number:
**PCT/KR2023/012394**

(87) International publication number:
**WO 2024/043659 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.08.2022 KR 20220104571**

(71) Applicant: **LG Electronics Inc.**
**Yeongdeungpo-gu**
**Seoul 07336 (KR)**

(72) Inventors:
• HUR, Hyejung
Seoul 06772 (KR)
• PARK, Yousun
Seoul 06772 (KR)

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)    A point cloud data transmission method according to embodiments may comprise the steps of: encoding point cloud data; and transmitting a bitstream comprising the point cloud data. A point cloud data reception method according to embodiments may comprise the steps of: receiving a bitstream comprising point cloud data; and decoding the point cloud data.

FIG. 1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

In one aspect of the present disclosure, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;

FIG. 2 is a block diagram illustrating a point cloud content providing operation according to embodiments;

FIG. 3 illustrates an exemplary point cloud encoder according to embodiments;

FIG. 4 shows an example of an octree and occupancy code according to embodiments;

FIG. 5 illustrates an example of point configuration in each LOD according to embodiments;

FIG. 6 illustrates an example of point configuration in each LOD according to embodiments;

FIG. 7 illustrates a point cloud decoder according to embodiments;

FIG. 8 illustrates a transmission device according to embodiments;

FIG. 9 illustrates a reception device according to embodiments;

FIG. 10 illustrates an exemplary structure operable in connection with point cloud data transmission/reception methods/devices according to embodiments;

FIG. 11 illustrates a secondary residual transformation method for an occupancy tree according to embodiments;

FIG. 12 illustrates a point cloud data transmission device according to embodiments;

FIG. 13 illustrates a point cloud data reception device according to embodiments;

FIG. 14 illustrates a bitstream containing point cloud data and parameters according to embodiments;

FIG. 15 illustrates a sequence parameter set according to embodiments;

FIG. 16 illustrates a tile parameter set according to embodiments;

FIG. 17 illustrates a geometry parameter set and an attribute parameter set according to embodiments;

FIG. 18 illustrates a geometry data unit and a geometry data unit header according to embodiments;

FIG. 19 illustrates an occupancy tree according to embodiments;

FIG. 20 illustrates a predictive tree according to embodiments;

FIG. 21 illustrates an attribute data unit and an attribute data unit header according to embodiments;

FIG. 22 illustrates attribute coefficients according to embodiments;

FIG. 23 illustrates a method of transmitting point cloud data according to embodiments; and

FIG. 24 illustrates a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

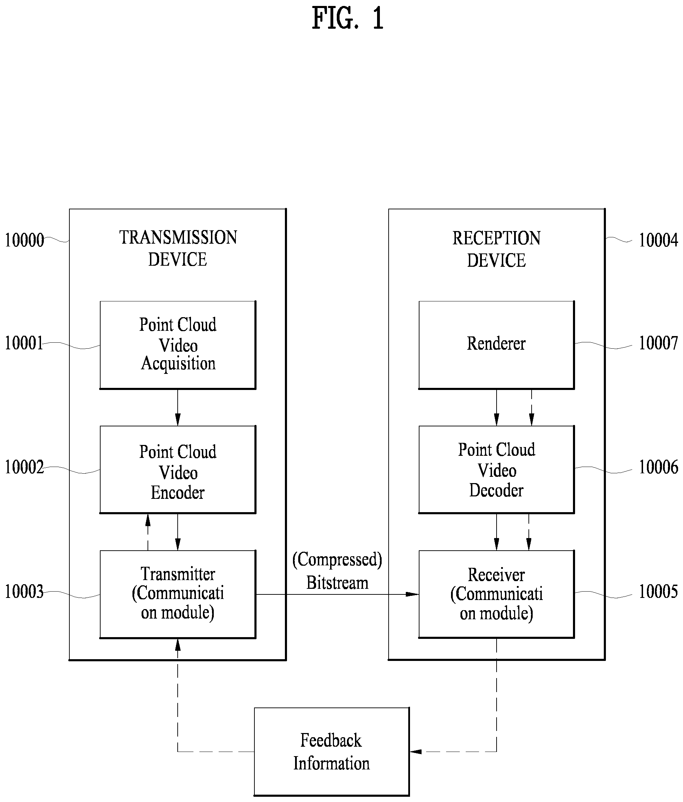

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

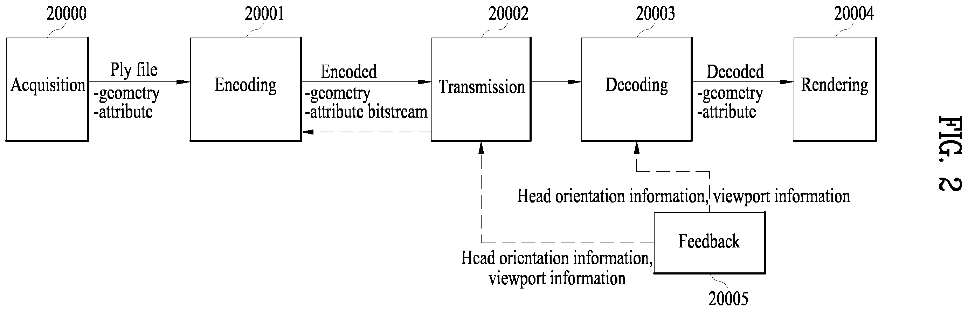

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

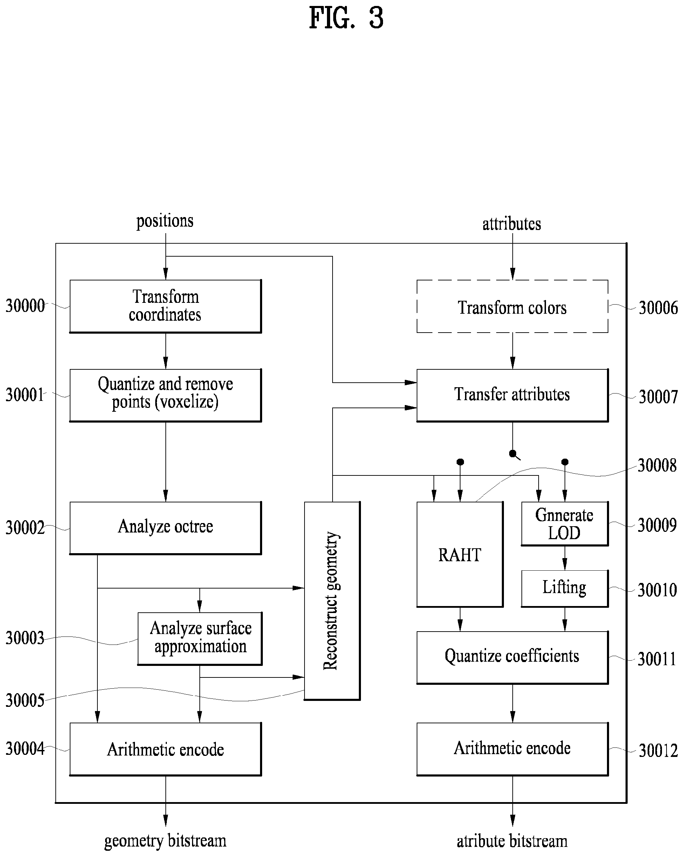

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

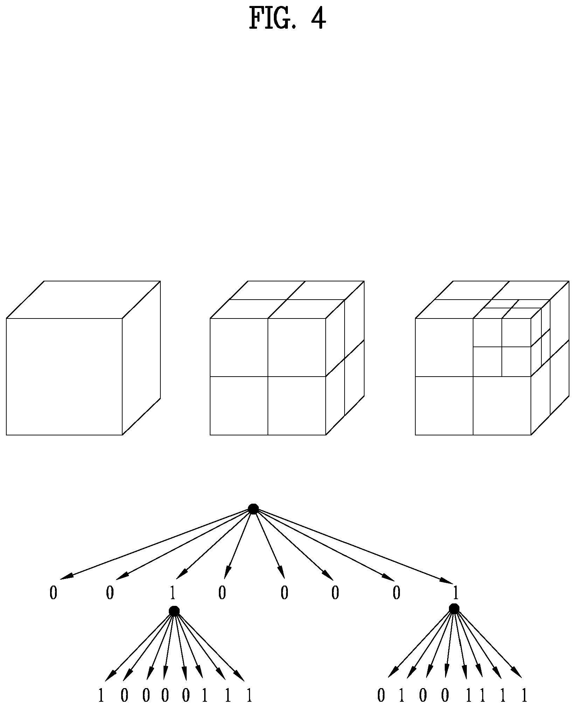

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, 2d may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$d=Ceil(Log2(Max(x\_n^{\wedge}int,y\_n^{\wedge}int,z\_n^{\wedge}in,n=1,\ldots,N)+1))$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{①} \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad \text{②} \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad \text{③} \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABEL 2-1. Triangles formed from vertices ordered 1,...,n

n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

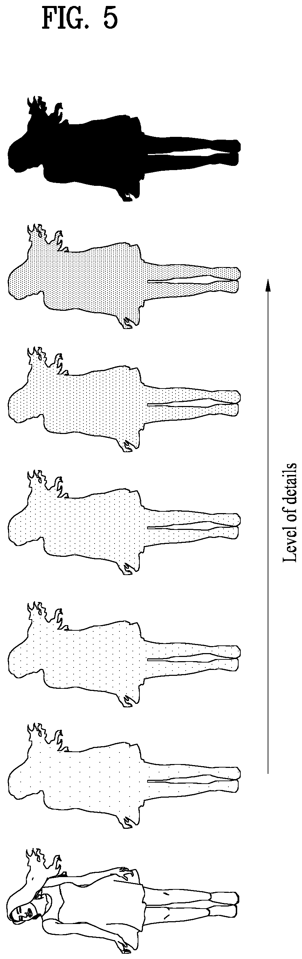

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

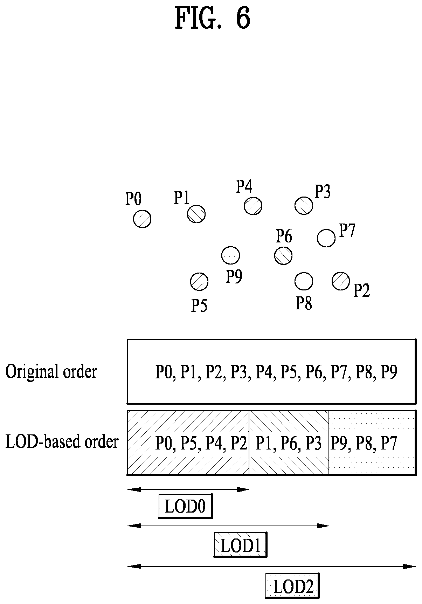

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LODO contains P0, P5, P4 and P2. LOD1 contains the points of LODO, P1, P6 and P3. LOD2 contains the points of LODO, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

```
TABLE Attribute prediction residuals quantization pseudo code
int PCCQuantization(int value, int quantStep) {
if( value >=0) {
return floor(value / quantStep + 1.0 / 3.0),
} else {
return -floor(-value / quantStep + 1.0 / 3.0),
}
}
TABLE Attribute prediction residuals inverse quantization pseudo code
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\,x,y,z}$ denotes the average attribute value of voxels at level 1. $g_{l\,x,y,z}$ may be calculated based on $g_{l+1\,2x,y,z}$ and $g_{l+1\,2x+1,y,z}$. The weights for $g_{l\,2x,y,z}$ and $g_{l\,2x+1,y,z}$ are $w_1 = w_{l\,2x,y,z}$ and $w2 = w_{l\,2x+1,y,z}$.

$$\begin{bmatrix} g_{l-1_{x,y,z}} \\ h_{l-1_{x,y,z}} \end{bmatrix} = T_{w1\ w2} \begin{bmatrix} g_{l_{2x,y,z}} \\ g_{l_{2x+1,y,z}} \end{bmatrix} , \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l\text{-}1\,x,y,z}$ is a low-pass value and is used in the merging process at the next higher level. $h_{l\text{-}1\,x,y,z}$ denotes high-pass coefficients. The high-pass coefficients at each step are quantized and subjected to entropy coding (e.g., encoding by the arithmetic encoder 300012). The weights are calculated as $w_{l\text{-}1x,y,z} = w_{l\,2x,y,z} + w_{l\,2x+1,y,z}$. The root node is created through the $g_{1\,0,0,0}$ and $g_{1\,0,0,1}$ as follows.

$$\begin{bmatrix} gDC \\ h_{0_{0,0,0}} \end{bmatrix} = T_{w1000\ w1001} \begin{bmatrix} g_{1_{0,0,0z}} \\ g_{1_{0,0,1}} \end{bmatrix}$$

The value of gDC is also quantized and subjected to entropy coding like the high-pass coefficients.

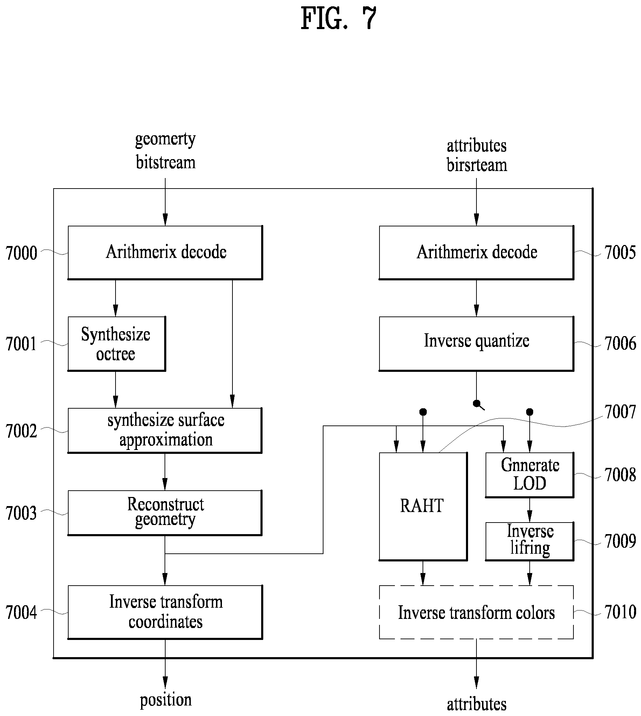

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

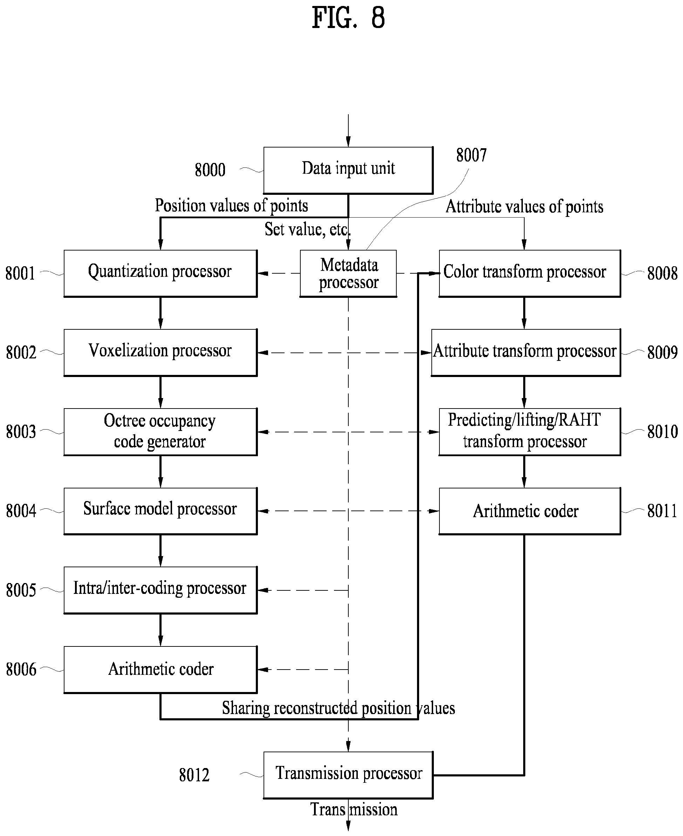

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

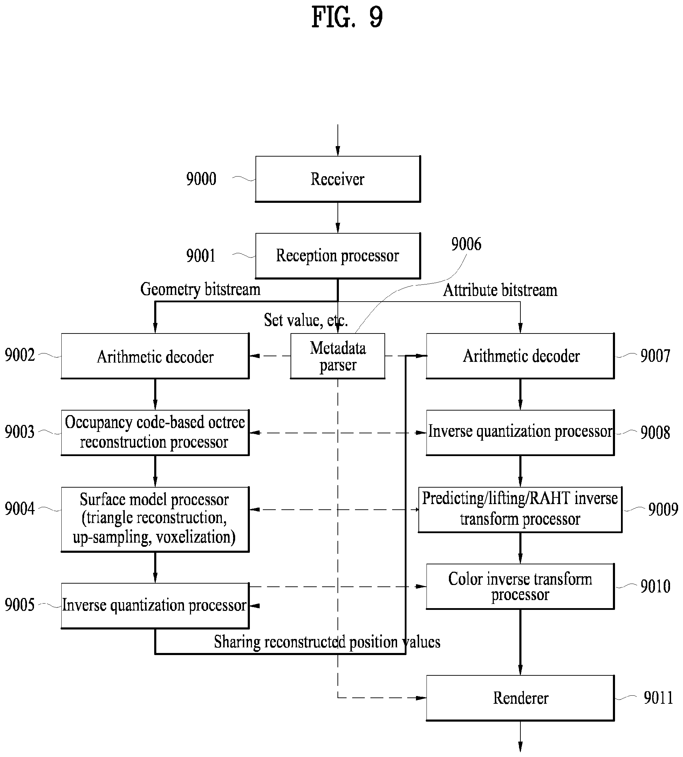

FIG. 9 illustrates a reception device according to embodiments.

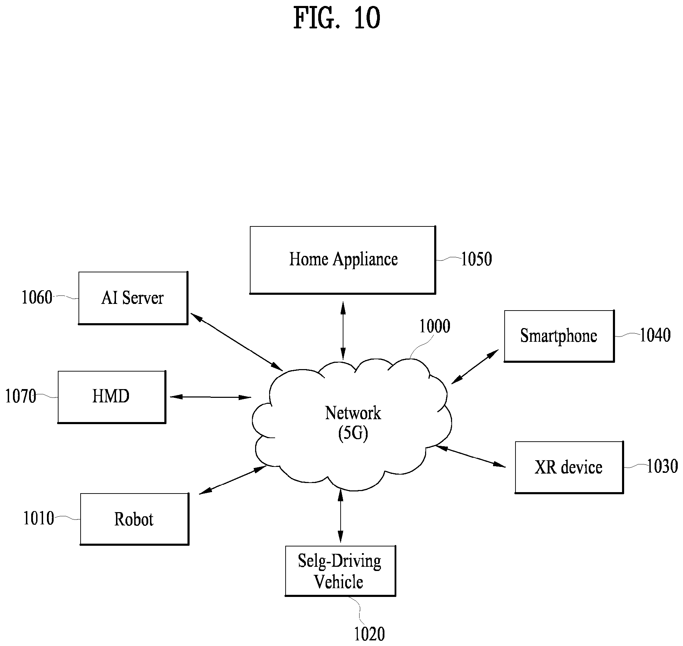

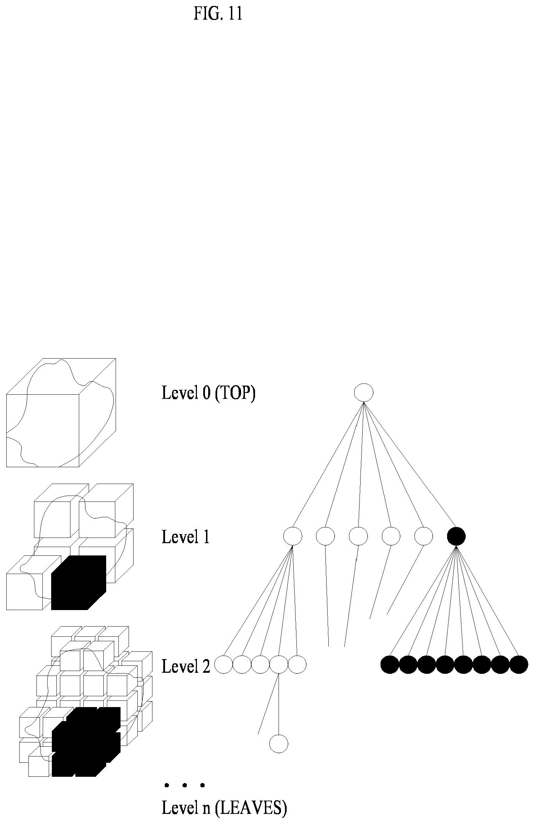

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

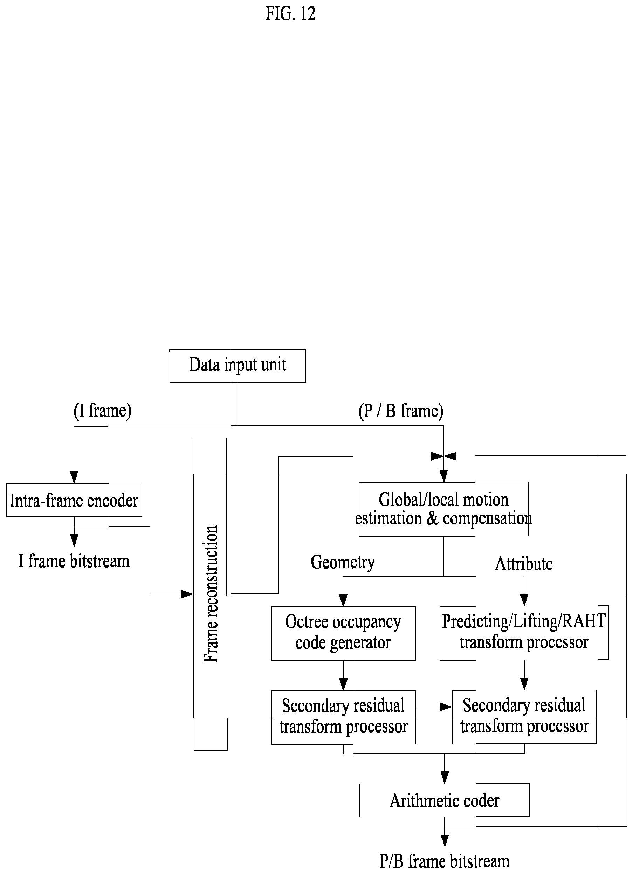

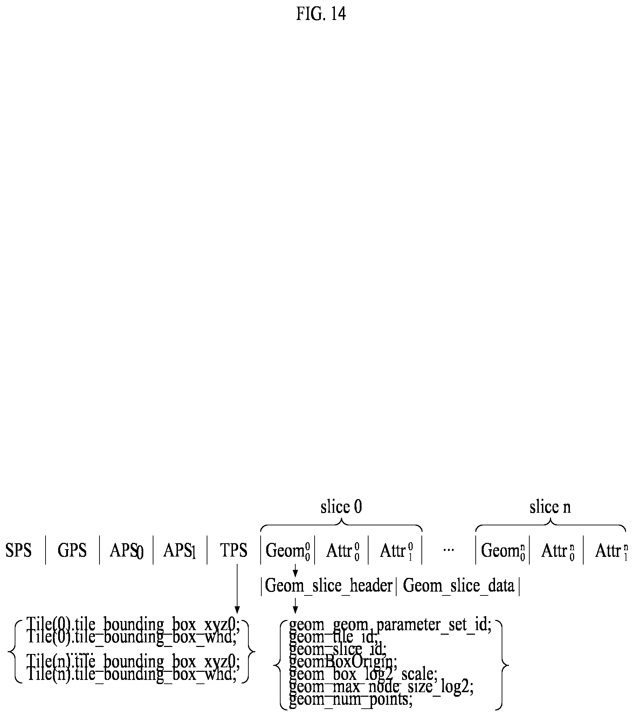

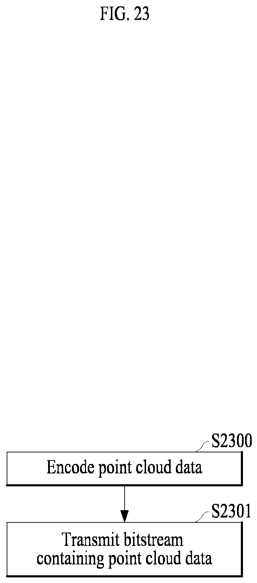

As used herein, the term "point cloud data transmission method/device according to embodiments" should be construed as referring to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the tree-based encoding of FIG. 11, the transmission device and encoder of FIG. 12, the bitstream generation of FIGS. 14 to 22, the transmission method of FIG. 23, and the like.

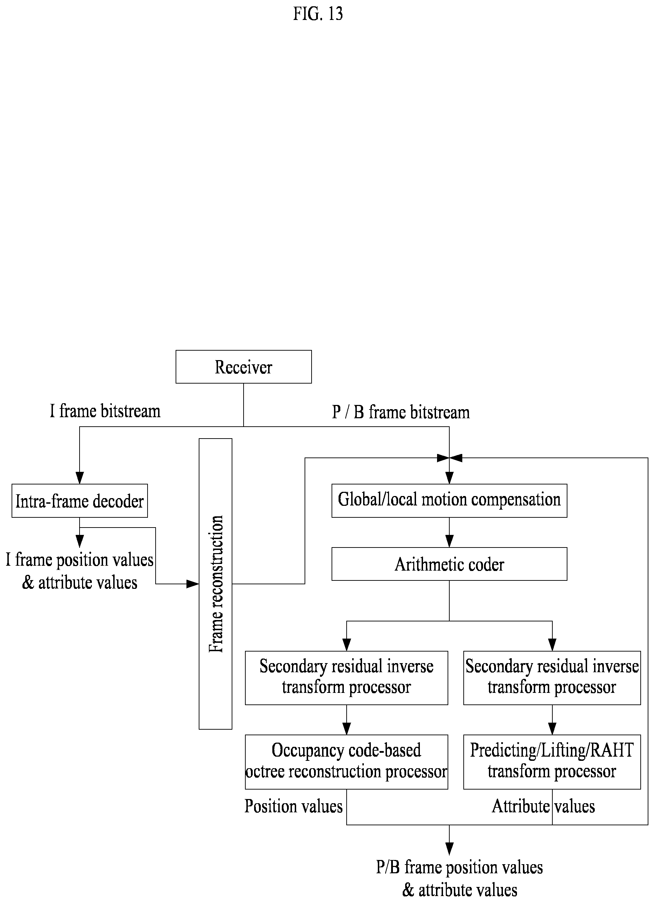

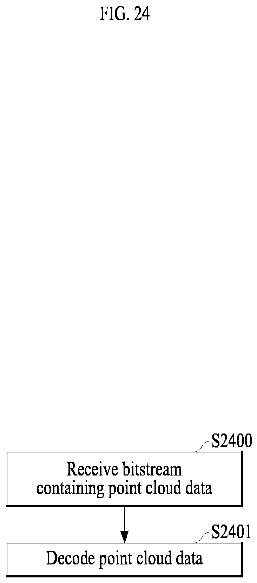

As used herein, the term "point cloud data reception method/device according to embodiments" should be construed as referring to the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the tree-based decoding of FIG. 11, the reception device and decoder of FIG. 13, the reception method of FIG. 24, and the like.

Further, the point cloud data transmission and reception methods/devices may be referred to as methods/devices according to the embodiments.

According to embodiments, geometry data, geometry information, position information, and the like that make up the point cloud data are to be construed as having the same meaning. Similarly, attribute data, attribute information, and the like that make up the point cloud data are to be construed as having the same meaning.

A method/device according to embodiments may include and perform secondary residual transform for point cloud geometry and attribute compression.

After the geometry and attribute transformation, the residuals are subjected to entropy coding and transmitted in a bitstream through. There are common characteristics between the residuals output after the primary transform of geometry and attributes. Embodiments are intended to reduce secondary residuals through secondary transform between frames. In addition to the geometry and attribute transform currently used as standards in GPCC, secondary transforms that may correspond to each embodiment are proposed, and a method of improving the compression rate through the reduction of the values of residuals, which may be applied to inter-frame compression, is provided.

The embodiments include a method to improve compression performance by reducing residuals in the 3D point cloud data compression process using transform or secondary transform after the transform.

A point cloud is composed of a set of points, and each point may have geometry information and attribute information. The point cloud encoding process may include compressing geometry and compressing the attribute information based on the reconstructed geometry (=decoded geometry) with the position information changed by the compression. The point cloud decoding process may include receiving an encoded geometry bitstream and attribute bitstream, decoding geometry, and decoding attribute information based on the geometry reconstructed through the decoding.

In order to represent the position and size of the 3D space as occupancy, octree configuration may be performed as follows. Since the z-axis is added, dividing the space based on the x-axis, y-axis, and z-axis creates 8 spaces, and dividing each of the 8 spaces again based on the x-axis, y-axis, and z-axis creates 8 spaces for each small space. The region is divided until the leaf node becomes a voxel, and an octree data structure for managing 8 child node regions may be used to efficiently manage the sizes and positions of the regions.

An octree according to embodiments refers to a tree structure having one or more nodes per depth (level). Each node of a size corresponding to the depth (level) may have one or more points, and there may be nodes unoccupied by points.

A predictive tree refers to the process of creating a tree structure with connections between points from the xyz coordinates of a point cloud. A predictive tree is constructed as follows. Received points are sorted based on specific criteria, and a predictive tree structure is created by calculating predicted values according to neighbor nodes from the rearranged ply.

A point cloud may have various attribute values for a point and may include attribute values differently according to characteristics of content, such as color and reflectance. Existing methods include encoding predicted values and residuals according to the predicting transform and the lifting transform.

In the predicting transform and lifting transform, points may be grouped into levels of detail (referred to as LODs). This is called LOD generation. Hereinafter, a group with different LODs may be referred to as an LOD set. LOD0 is a set of points with the largest distance between points. As 1 increases, the distance between points in LOD1 decreases. After generating the LOD set, the X (>0) nearest neighbor points may be found in groups with the same or lower LOD (large distance between nodes) and registered as a neighbor point set in the predictor. X is the maximum number of points that may be configured as neighbor points and may be input as a user parameter. Neighbor points of P3 belonging to LOD1 are searched in LOD0 and LOD1. The three nearest neighbor nodes may be P2, P4, and P6. These three nodes are registered as the neighbor point set in the predictor of P3. Every point may have one predictor. The attributes are predicted from the neighbor points registered in the predictor. The predictor may have a neighbor point set and, based on the distance from each neighbor point, register ½distance as a weight. The predictor for node P3 has (P2 P4 P6) as a neighbor point set and calculates weights based on the distance from each neighbor point. The weight for each neighbor point is $(1/\sqrt{(P2-P3)^2}, 1/\sqrt{(P4-P3)^2}, 1/\sqrt{(P6-P3)^2})$. Once the neighbor point set for the predictor is configured, the weights for the respective neighbor points may be normalized by the sum of all weights of the neighbor points.

Embodiments include a method for performing secondary residual transform of geometry and attribute information between frames. The secondary residual transform refers to primary residual transform or geometry or attribute information obtained from the primary residual transform. The difference between similar residuals among the residuals generated from the geometry and attributes, respectively, may be referred to as a secondary residual. Transforming secondary residuals, i.e., the differences between residuals, may be referred to as secondary residual transform.

After primary transform of the residual signal, compression performance may be improved through secondary transform and may be applied to all signals referred to as residuals. In current GPCC, a residual refers to a signal that is obtained after certain transform in point cloud compression, such as occupancy tree, predictive tree, predicting transform, lifting transform.

Embodiments include a method of secondarily transforming a signal obtained after each transform. Additionally, embodiments present a secondary transform method using inter-frame information to be applied in unit-based applications in inter-frame coding.

FIG. 11 illustrates a secondary residual transform method for an occupancy tree according to embodiments.

The point cloud data transmission method/device according to embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the transmission device and encoder of FIG. 12, and the transmission method of FIG. 23) may perform geometry encoding and attribute encoding based on an occupancy tree (which has the same meaning as an octree) as shown in FIG. 11. The residual generated and primarily transformed from the occupancy tree may be secondarily transformed.

The point cloud data reception method/device according to embodiments (the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the reception device and decoder of FIG. 13, and the reception method of FIG. 24) may perform geometry decoding and attribute decoding based on an occupancy tree (which has the same meaning as an octree) as shown in FIG. 11. The residual generated and primarily transformed from the occupancy tree may be secondarily transformed.

The conditions for applying secondary residual transform to the octree are as follows. According to the embodiments, the occupancy status is checked using an xyz spatial division algorithm, occupancy is searched, and the planar mode, QTBT, IDCM, or the like is determined. By determining the occupancy of the six faces adjacent to the occupancy and the occupancy of the parent node, entropy coding is performed according to the probability. In this case, the before entropy coding, an additional transform may be applied, which is called secondary residual transform.

As shown in FIG. 11, the parent node at the top level, i.e., level 0 (which may also be referred to as depth 0), may include one or more child nodes. The subdivided nodes of level 1 may include one or more nodes of level 2 depending on the occupancy status. Depending on the point occupancy status of the nodes, the tree levels and nodes hierarchically expand to the leaf nodes.

Direct coding mode (DCM) refers to the mode in which an isolated point present in an occupancy tree node is excluded from the octree, and is subjected to direct coding.

Planner coding mode refers to a coding mode for occupied child nodes belonging to the same horizontal plane.

The secondary residual transform according to the embodiments, which is performed before the entropy coding, is an operation of transforming residuals generated after neighbor search. Based on the occupancy tree, neighbors of the current point are searched for, and the residual between the neighbors and the current point may be transformed.

In the current GPCC, the index resulting from the neighbor search is calculated as an occupancy index from the occupancy bit (occupancy bit) and/or occupancy byte (occupancy_byte). The occupancy index, which represents the relative child node position for the only child of the coded node, is stored as an array and transmitted in a bitstream. The k-th component of the relative child node position for a child node for a coded node may be expressed as occupancy_idx[]. In other words, the occupancy index represents an index related to the position. Since the occupancy index also affects the occupancy map, there may be an inter-frame shift on the occupancy map. The residual transform takes advantage of the redundancy that the difference between the current index and the index of the next frame is not significant. Therefore, the octree index of the previous frame is shifted according to the motion of the octree index of current frame. Even if global motion is applied, the octree index is shifted uniformly or increased/decreased consistently. Therefore, even if the intra-frame occupancy index (occupancy_idx) of the existing octree occupancy is selected, the residual transform may be performed once more by comparing the frames for occupancy_idx. When the occupancy index (occupancy_idx) of the previous frame is defined as a reference occupancy index (ref_occupancy_idx), and the occupancy index (occupancy_idx) of the current frame is defned as a current occupancy index (cur_occupancy_idx), the equation for secondary residual transform, that is, the equation for calculating the difference between residual signals, is given below.

$$occupancy\_idx' = ref\_occupancy\_idx - cur\_occupancy\_idx$$

The set of differences (occupancy_idx') between residuals in all leaf nodes, i.e., occupancy_idx'[k] (where k is the number of leaf nodes) including occupancy_idx'[0].. occupancy_idx'[k], is replaced with (transformed into) a set of new values by applying DCT/DST (Discrete Cosine Transform / Discrete Sine Transform) methods. The replaced (transformed) set is subjected to entropy coding and then included in a bitstream to be transmitted to the reception device.

The point cloud data transmission method/device according to embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the transmission device and encoder of FIG. 12, and the transmission method of FIG. 23) may perform geometry encoding and attribute encoding based on a predictive tree. The residual generated and primarily transformed from the predictive tree may be secondarily transformed.

The point cloud data reception method/device according to embodiments (the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the reception device and decoder of FIG. 13, and the reception method of FIG. 24) may perform geometry decoding and attribute decoding based on a predictive tree. The residual generated and primarily transformed from the predictive tree may be secondarily transformed.

The predictive tree refers to a parent (upper)-child (lower) structure generated by predicting position values with the previous two points or two points from the previous frame. Prediction mode (ptn\_pred\_mode) indicates the mode used for prediction based on a point and may be signaled from the encoder to the decoder as signaling information in the bitstream. The residual (PtnResidual) between the current point and the predicted value of the current point may be signaled by the bitstream. Although not specified in the present disclosure, a method of signaling a mode and residual per point is being standardized for inter-frame coding. The residuals are similar because of the similarity in the way objects or roads move after applying global motion between frames. The secondary residual transform may be performed by distinguishing between a case where the residuals are similar across modes and a case where the residuals are similar across frames.

The secondary residual transform is performed with a set of residuals calculated by mode and is similar to the equation above. When mode-specific residuals are similar, a set of residuals (the set of differences between residual signals) corresponding to modes 0 to 3 may be represented.

$$PtnResidual'[k][l] = PtnResidual[k][l] - PtnResidual[k][l-1]$$

{k=0..3} {1=0..the number of residuals with mode k}

DCT/DST may be applied to the set of residuals. When DCT/DST is applied to the 2D set of PtnResidual', the set may be divided into a high-frequency region and a low-frequency region and may be transformed per specific block (4x4, 8x8, 32x32) or variable block. Additionally, secondary residual transform may be performed on residuals such as ptnSecResidual, aPos0, aPos1, aPos2, and residualAng, generated after prediction.

Modes 0 to 3 are as follows:

The main target of the prediction modes may be content of category 3. The predictive structure (tree) is generated from the point cloud. In the predictive tree, each point in the point cloud is connected to vertices of the tree. Each vertex may only be predicted from the ancestors of the tree.

Mode 0: No prediction, Mode 1: Delta prediction (i.e., p0), Mode 2: Linear prediction (i.e., 2p0-p1), Mode 3: Parallelogram predictor (i.e., 2p+p1-p2). Here, p0, p1, and p2 are the positions (points) of the parent, grandparent, and grand-grandparent of the current vertex.

The point cloud data transmission method/device according to embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the transmission device and encoder of FIG. 12, and the transmission method of FIG. 23) may perform geometry encoding and attribute encoding based on predicting transform and lifting transform. The residual generated and primarily transformed from the predictive tree may be secondarily transformed.

The point cloud data reception method/device according to embodiments (the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the reception device and decoder of FIG. 13, and the reception method of FIG. 24) may perform geometry decoding and attribute decoding based on predicting transform and lifting transform. The residual generated and transformed through the predicting transform and lifting transform may be secondarily transformed.

The residuals generated through the predicting/lifting transform may be secondarily transformed. By selecting the prediction mode method with predMode after performing the predicting transform, residuals corresponding to the coefficient (coeff_abs) are generated. The values of the coefficient (coeff_abs) may be used to predict attribute values changing between frames. Therefore, when the residuals of different modes are similar, they may be represented as a set of corresponding residuals (a set of differences between residual signals). Similar to the previous embodiments, DCT/DST may be applied for secondary residual transform. It may be performed individually according to the number of attribute values (attrDim).

FIG. 12 illustrates a point cloud data transmission device according to embodiments.

FIG. 12 corresponds to a device for performing the point cloud data transmission method (which corresponds to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, and the transmission method of FIG. 23). It may be referred to as an encoder, and each component of FIG. 12 may correspond to hardware, software, a processor, and/or a combination thereof. It may be implemented with a memory and a processor.

When point cloud data transmission device of in FIG. 3 or 8 performs inter-frame based compression, it may compress geometry and attributes based on a reference frame, and generate and transmit a bitstreams, as illustrated in FIG. 12.

The data input unit acquires a point cloud. The point cloud data includes geometry and attributes. The point cloud data may be organized on a frame-by-frame basis.

The types of frames for inter-frame based encoding may include an I-frame, a P-frame, and a B-frame. A group of pictures (GOP) represents a group of frames. The I-frame (intra frame) is a frame that does not reference other frames, unlike the B-frame or P-frame. The P-frame (predicted frame) is a frame that references the immediately preceding I-frame and includes only the data differing from the reference frame. The B-frame (bidirectional frame) is

The I-frame may be encoded by intra-frame encoding.

The intra-frame encoder encodes the geometry and/or attributes of the intra-frame point cloud data to generate a bitstream corresponding to the I-frame, as described regarding the devices for performing the data transmission method according to embodiments: the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, and the transmission method of FIG. 23.

For inter-frame encoding, the frame reconstructor of the transmission device reconstructs the encoded data in the I-frame bitstream. The inter-frame encoder receives a P-frame and/or B-frame from the data input unit and encodes the current frame by referencing the previous frame (reference frame) based on the reconstructed I-frame data.

The global motion and/or local motion estimation and compensation part estimates and compensates for the motion information about the current frame based on the frames. It estimates the motion information based on the similarity of data in a certain area or block of the current frame based on the reference frame. It may generate motion vectors by estimating motion information and predict the data of the current frame from the data of the previous frame based on the motion vectors. By encoding the difference between the current data and the predicted data, the bitstream size may be effectively reduced. The embodiments include global motion estimation based on global motion information for globally estimating motion within a frame and local motion estimation based on local motion information for locally estimating motion within a frame.

Embodiments include encoding each inter-frame motion-estimated geometry and attribute.

The octree occupancy code generator of the geometry compressor generates an octree (occupancy tree) structure for the geometry and generates a occupancy code bit indicating whether nodes at each level (depth) occupy one or more points.

The geometry compressor may generate a predictive tree and encode the geometry based on the predictive tree.

The secondary residual transform processor of the geometry compressor generates an occupancy index and generates a difference value between the reference occupancy index and the current occupancy index, as described above (occupancy _idx' = ref_occupancy _idx - cur_occupancy_idx).

According to embodiments, for points generated based on the predictive tree, a difference value between the point (geometry) residuals of the reference frame and the current frame is generated, as described above (PtnResidual'[k] [1] = PtnResidual[k] [1] - PtnResidual[k] [1-1]).

The predicting/lifting transform/RAHT processor of the attribute compressor perform predicting, lifting, and RATH transform on the attributes.

According to embodiments, a difference value between the residual of the reference frame and the residual of the current frame is generated for the residual of coefficient information (coeff_abs) according to the prediction mode generated through predicting/lifting transform/RAHT.

For each of the geometry and attributes, the arithmetic coder of the encoder arithmetically encodes the additional difference between the residuals generated according to the motion estimation and each encoding method.

FIG. 13 illustrates a point cloud data reception device according to embodiments.

FIG. 13 corresponds to the point cloud data reception method/device according to embodiments (the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, and the reception method of FIG. 24). Each component of FIG. 13 corresponds to hardware, software, a processor, and/or a combination thereof. The device of FIG. 13 may perform the reverse process to the operations of the transmission device of FIG. 12.

The receiver of the reception device may receive a bitstream containing encoded point cloud data and parameters corresponding to signaling information from the transmitter of the transmission device.

Like the transmission device, the reception device may perform both intra-frame decoding and inter-frame decoding.

The intra-frame decoder of the reception device may decode the geometry and attributes of the point cloud data in the I-frame. The intra-frame decoding method follows the operations of the geometry decoding and attribute decoding described in relation to the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the reception method of FIG. 24.

The frame reconstructor of the reception device reconstructs the decoded geometry and attributes in the I-frame and delivers the same to inter-frame decoding.

For inter-frame decoding, the decoder of the reception device may receive a P-frame and/or a B-frame from the receiver.

Like the transmission device, the global motion and local motion estimation and compensation part of the reception device may generate an intra-frame global motion vector and compensate for motion or may generate intra-frame local motion vectors and compensate for motion, based the data similarity between the reference frame and the current frame.

The arithmetic decoder arithmetically decodes the motion-compensated geometry and attributes.

The secondary residual inverse transform processor parses geometry secondary residual transform information (geom_secondary_residual_transform), which indicates whether secondary residual transform based on the reference frame received from the geometry compressor is used, sums the differences between the residuals secondarily to reconstruct the residuals, and sums the residuals primarily to reconstruct the geometry.

In the case where the geometry is encoded based on a tree (octree or occupancy tree) related to the occupancy code, the reception device reconstructs the octree (tree) based on the occupancy code to construct the geometry, which is the position values of the points.

In the case where the geometry is encoded based on a predictive tree, the reception device reconstructs the predictive tree to reconstruct the geometry, which is the position values of the points, based on the predictive tree.

Attribute secondary residual transform information (attr_secondary_residual_transform), which indicates whether secondary residual transform based on the reference frame received from the attribute compressor is used, is parsed, the residuals are reconstructed by summing the differences between the residuals secondarily, and then the residuals are summed primarily to reconstruct the geometry.

The occupancy index (occupancy_idx), predictive tree residual (PtnResidual), and coefficient (coeff_abs), which are values transformed through secondary residual transform, may be inversely transformed and delivered to the primary transform processor.

FIG. 14 illustrates a bitstream containing point cloud data and parameters according to embodiments.

The point cloud data transmission method/device according to embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the transmission device and encoder of FIG. 12, and the transmission method of FIG. 23) may encode a point cloud, generate parameters to transmit the same in a bitstream, as illustrated in FIGS. 14 to 22.

The point cloud data reception method/device according to embodiments (the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the reception device and decoder of FIG. 13, and the reception method of FIG. 24) may receive a bitstream as shown in FIGS. 14 to 22 and decode the point cloud based on the parameters.

Signaling may be provided to add/perform the encoding/decoding method using the secondary transform of geometry and attribute residuals. The parameters (which may be referred to as metadata, signaling information, etc.) according to embodiments may be generated in the process of a transmitter according to embodiments described below, and transmitted to a receiver according to embodiments so as to be used in the reconstruction process. For example, the parameters according to the embodiments may be generated by the metadata processor (or metadata generator) in the transmission device according to embodiments described below and acquired by the metadata parser in the reception device.

Each of the following abbreviations means: SPS: Sequence Parameter Set; GPS: Geometry Parameter Set; APS: Attribute Parameter Set; TPS: Tile Parameter Set; Geom: Geometry bitstream = geometry data unit (geometry data unit header + geometry data + geometry data + geometry data unit footer); Attr: Attribute bitstream = attribute data unit (attribute data unit header + attribute data + attribute data unit footer).

The point cloud may be divided into regions, such as tiles or slices, for processing. Each region has a different level of importance. Depending on the importance, different filters or filter units may be applied, allowing a filtering method with higher complexity and higher quality results to be used for important regions. Instead of applying a complex filtering method to the entire point cloud, different filtering methods may be applied to different regions (tiled or sliced regions) according to the processing capacity of the receiver, thereby ensuring better quality for the regions that are important to the user and adequate latency in the system. Therefore, when a point cloud is divided into tiles, different filters or filter units may be applied to the respective tiles. When a point cloud is divided into slices, different filters or filter units may be applied to the respective slices.

Referring to FIG. 14, a bitstream may include an SPS, a GPS, one or more APSs, a TPS, or one or more slices, which are a target unit to which parameters are applied. The TPS may include information about the origin and size (width, depth, and height) of a tile bounding box for one or more tiles. A slice serves as a unit of encoding/decoding and may include geometry and one or more attributes. The geometry may be composed of a geometry slice header and geometry slice data. A slice may also be referred to as a data unit. The geometry slice header or geometry data unit header carries information such as the parameter set ID, tile ID, slice ID, origin and size of the geometry box, and the number of points for the geometry. The geometry slice data or geometry data unit carries the encoded geometry.

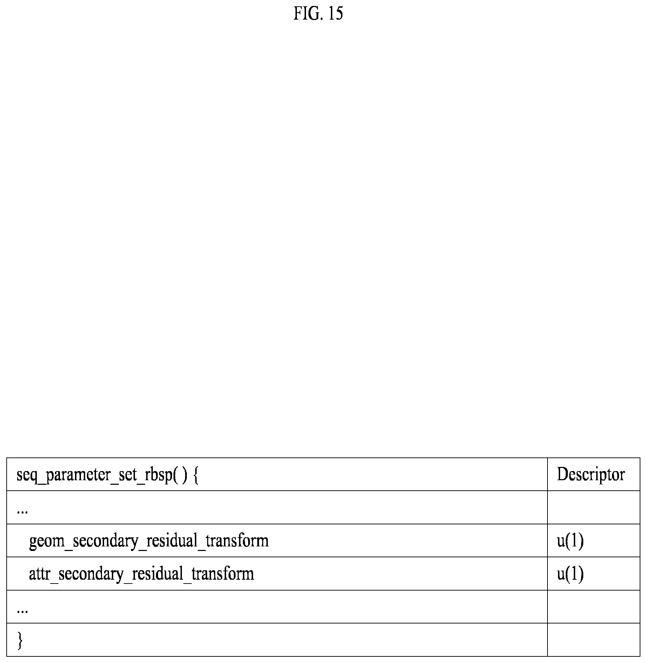

FIG. 15 illustrates a sequence parameter set according to embodiments.

FIG. 15 illustrates the SPS included in the bitstream of FIG. 14.

FIG. 15 shows the syntax with secondary residual transform encoding structure information added to the SPS. The secondary residual transform encoding structure information may be added to the SPS and signaled. The SPS according to the embodiments follows the syntax of the SPS according to the GPCC standard. Additionally, it includes secondary residual transform encoding information according to embodiments.

geom_secondary_residual_transform: Indicates whether secondary residual transform using the reference frame is used by the geometry compressor.

attr_secondary_residual_transform: Indicates whether secondary residual transform using the reference frame is used by the attribute compressor.

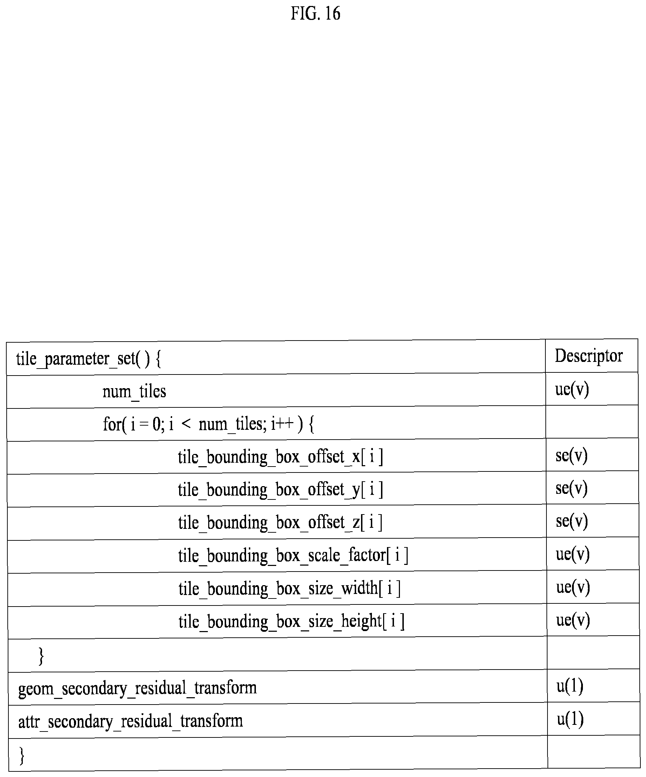

FIG. 16 illustrates a tile parameter set according to embodiments.

FIG. 16 illustrates the TPS included in the bitstream of FIG. 14.

Referring to FIG. 16, syntax with secondary residual transform encoding structure information added may be included in the TPS. The TPS according to the embodiments follows the syntax of the TPS according to the GPCC standard. Additionally, the secondary residual transform structure information according to the embodiments may be added to the TPS and signaled.

geom_secondary_residual_transform: Indicates whether secondary residual transform using the reference frame is used by the geometry compressor.

attr_secondary_residual_transform: Indicates whether secondary residual transform using the reference frame is used by the attribute compressor.

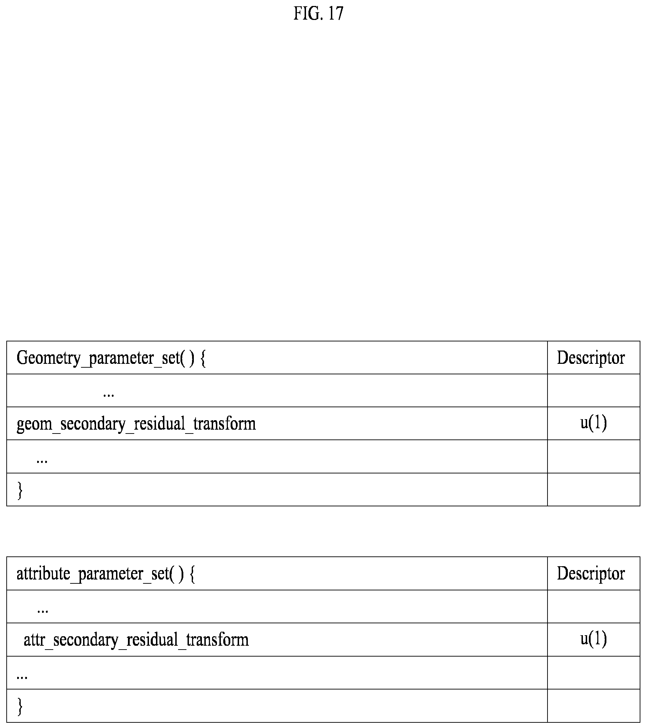

FIG. 17 illustrates a geometry parameter set and an attribute parameter set according to embodiments.

FIG. 17 illustrates the GPS and APS included in the bitstream of FIG. 14.

Referring to FIG. 17, syntax with secondary residual transform encoding structure information added may be included in the GPS and APS. The GPS and APS according to the embodiments follow the GPS and APS syntax according to the GPCC standard. Additionally, the secondary residual transform structure information according to the embodiments may be added to the GPS and APS and signaled.

geom _secondary residual_transform: Indicates whether secondary residual transform using the reference frame is used by the geometry compressor.

attr_secondary_residual_transform: Indicates whether secondary residual transform using the reference frame is used by the attribute compressor.

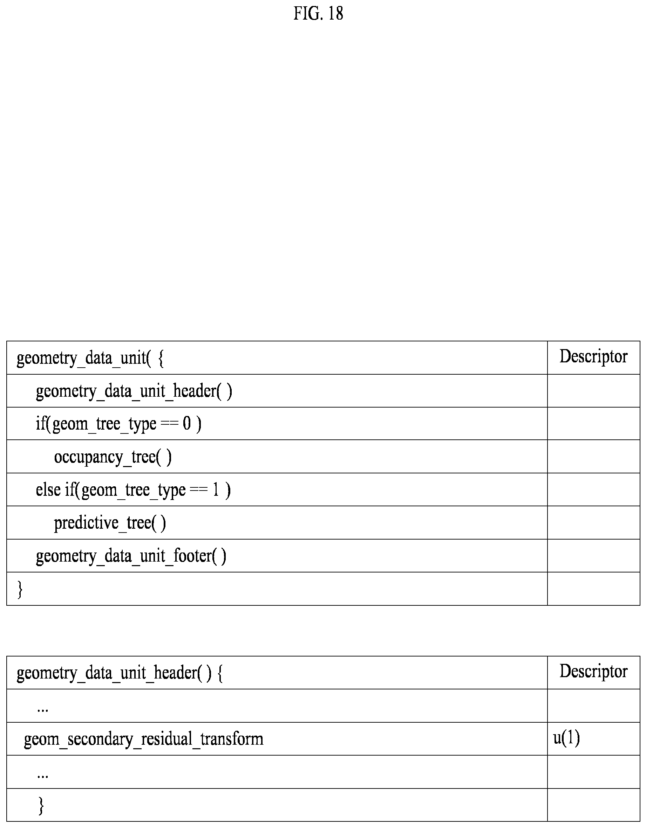

FIG. 18 illustrates a geometry data unit and a geometry data unit header according to embodiments.

FIG. 18 illustrates the geometry data unit and geometry data unit header included in the bitstream of FIG. 14.

Referring to FIG. 18, syntax with secondary residual transform encoding structure information added may be included in the geometry data unit and geometry data unit header. The geometry data unit and geometry data unit header according to the embodiments follow the geometry data unit and geometry data unit header syntax according to the GPCC standard. Additionally, the secondary residual transform structure information according to the embodiments may be added to the geometry data unit and geometry data unit header and signaled.

geom_tree_type: When set to 0, it indicates that the slice geometry is coded using the occupancy tree. When set to 1, it indicates that the slice geometry is coded using the predictive tree. The indication information according to 0 and 1 may be interchanged.

geom_secondary_residual_transform: Indicates whether secondary residual transform using the reference frame is used by the geometry compressor.

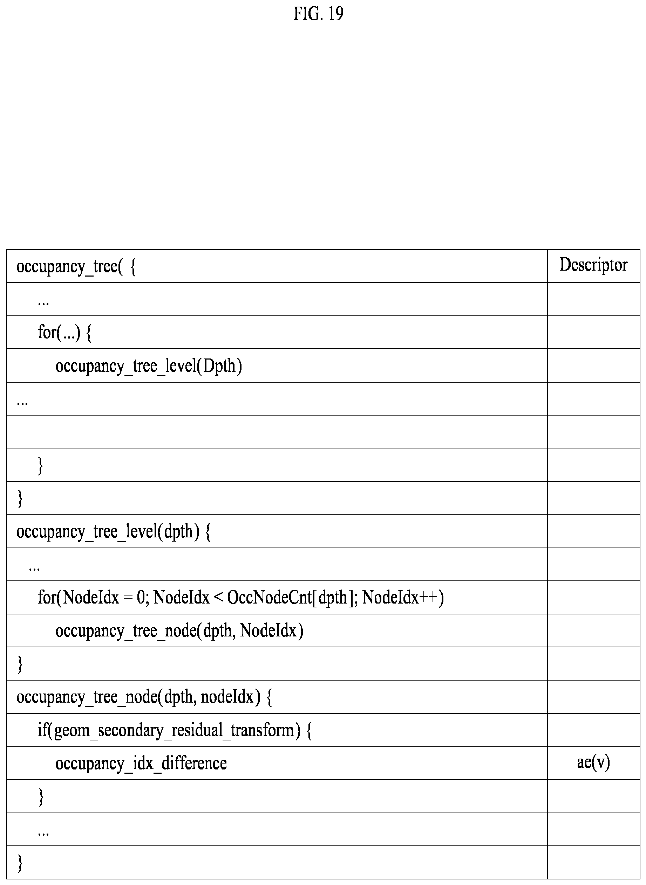

FIG. 19 illustrates an occupancy tree according to embodiments.

FIG. 19 illustrates the occupancy tree included in the bitstream of FIG. 14. The occupancy tree follows the occupancy tree syntax according to the GPCC standard.

Referring to FIG. 19, syntax with secondary residual transform encoding structure information added may be included in the geometry occupancy tree. The geometry occupancy tree according to the embodiments follows the geometry occupancy tree syntax according to the GPCC standard. Additionally, the secondary residual transform structure information according to the embodiments may be added to the geometry occupancy tree and signaled.

The occupancy tree includes occupancy tree levels (depths). Each of the occupancy tree levels includes nodes by depth. Nodes are identified by node indices. The occupancy node count indicates the number of nodes. OccNodeCnt [dpth] indicates the number of nodes at the depth.

An occupancy tree node with a node index at the depth has a difference in occupancy index. occupancy_idx_difference indicates the transformed value of geometry secondary residual transform.

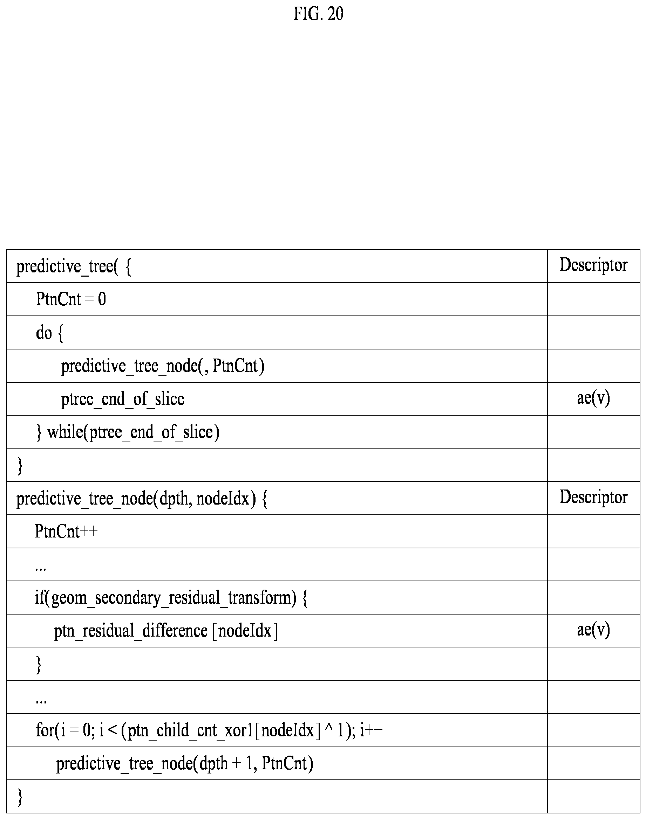

FIG. 20 illustrates a predictive tree according to embodiments.

FIG. 20 illustrates the predictive tree included in the geometry in the bitstream of FIG. 14.

According to embodiments, secondary residual transform encoding structure information may be added to the predictive tree of Geom in FIG. 14 and signaled. The predictive tree follows the syntax of the predictive tree according to the GPCC standard.

The predictive tree includes predictive tree nodes corresponding to the node number. The predictive tree node of a node index at the depth conveys predictive tree residual difference information.

Predictive tree node count (PtnCnt) counts the nodes parsed from the bitstream.

ptree_end of slice indicates whether there is a continuous predictive tree in the data unit.

ptn_residual_difference indicates the transformed value of the geometry secondary residual transform.

ptn_child_cnt_xor1[nodeIdx] xor 1 indicates the number of child nodes.

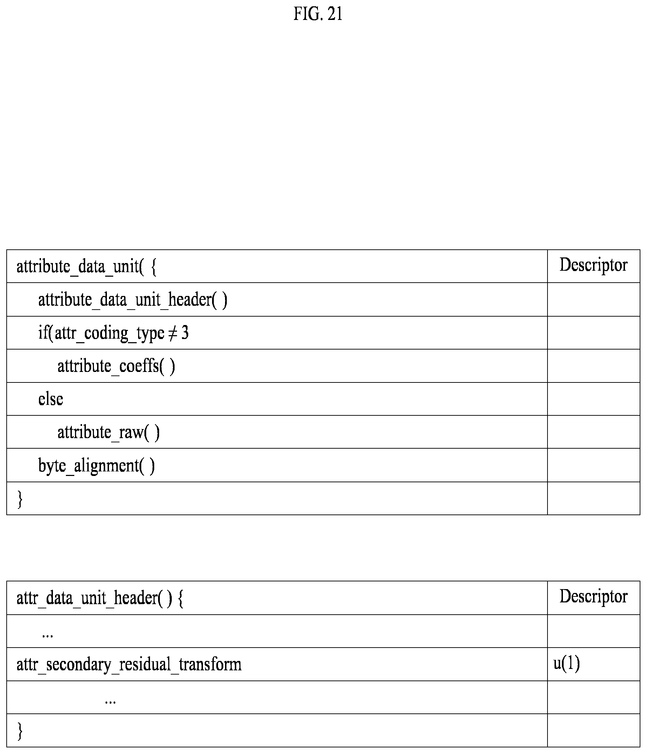

FIG. 21 illustrates an attribute data unit and an attribute data unit header according to embodiments.

FIG. 21 illustrates the attribute data unit and attribute data unit header included in the bitstream of FIG. 14. The attribute data unit and attribute data unit header follow the syntax of the attribute data unit and attribute data unit header according to the GPCC standard. Additionally, the secondary residual transform encoding structure information syntax may be added to the data of Attr.

attr_coding_type indicates the attribute coding method. For example, among the values thereof, 0 may indicate RAHT; 1 may indicate LoD with predicting transform; 2 may indicate LoD with lifting transform; 3 may indicate raw attribute data.

When attr_coding_type is not 3, attribute_coeffs() may be delivered.

Secondary residual transform encoding structure information may be added to the slice header of the Attr and signaled.

attr_secondary_residual_transform: Indicates whether secondary residual transform using the reference frame is used by the attribute compressor.

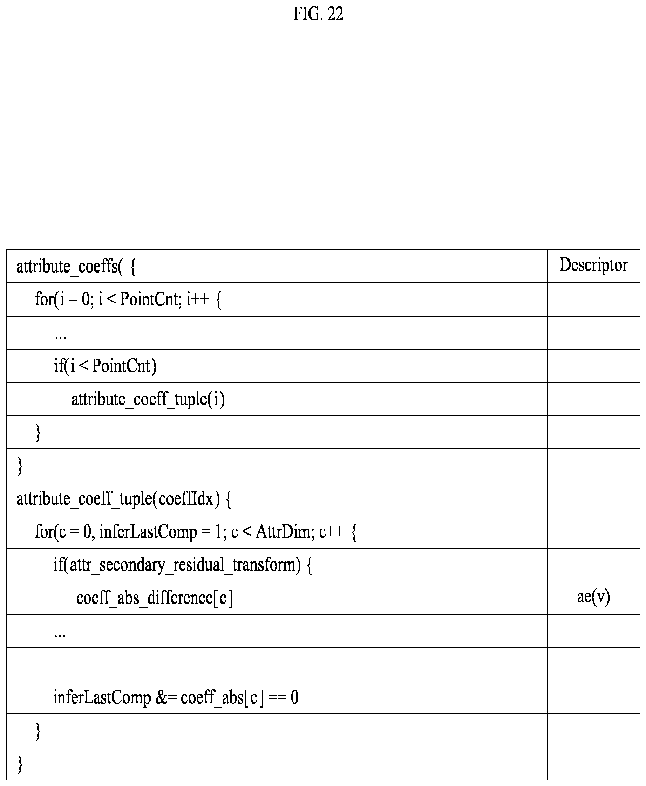

FIG. 22 illustrates attribute coefficients according to embodiments.

FIG. 22 illustrates the attribute coefficients included in the bitstream of FIG. 14. The attribute coefficients may follow the attribute syntax according to the GPCC standard. Additionally, secondary residual transform encoding structure information may be added to attribute_coeffs of Attr and signaled.

PointCnt: Indicates the cumulative count of decoded points.

AttrDim, AttrBitDepth, and AttrMaxVal indicate the number of components, bit depth, and maximum value of the attribute identified by the attribute index. Decoding of the attribute data unit sets the attribute index. AttrDim := attr_components_minus1[AttrIdx] + 1

attr_components_minus1[attrIdx] plus 1 indicates the number of components of the identified attribute.

coeff_abs_difference: Indicates the transformed secondary residual transform value of the attribute.

FIG. 23 illustrates a method of transmitting point cloud data according to embodiments.

S2300: The point cloud data transmission method according to the embodiments may include encoding point cloud data.

The encoding operation according to the embodiments may follow the descriptions of the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the tree-based encoding of FIG. 11, the transmission device and encoder of FIG. 12, the bitstream generation of FIGS. 14 to 22, the transmission method of FIG. 23, and the like.

S2301: The point cloud data transmission method according to the embodiments may further include transmitting a bitstream containing the point cloud data.

The transmission operation according to the embodiments follows the transmission operations of t the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the transmission device and encoder of FIG. 12, and the bitstreams of FIGS. 14 to 22.

FIG. 24 illustrates a method of receiving point cloud data according to embodiments.

S2400: The point cloud data reception method according to the embodiments may include receiving a bitstream containing point cloud data.

The reception operation according to the embodiments follows the reception operations of the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the reception device and decoder of FIG. 13, and the bitstreams of FIGS. 14 to 22.

S2401: The point cloud data reception method according to the embodiments may further include decoding the point cloud data.

The decoding operation according to the embodiments follows the descriptions of the reception device 10004, the receiver 10005, the point cloud video decoder 10006 of FIG. 1, the transmission 20002-decoding 20003-rendering 20004 of FIG. 2, the decoder of FIG. 7, the reception device of FIG. 9, the devices of FIG. 10, the predictive tree-based decoding of FIG. 11, the reception device and decoder of FIG. 13, the bitstream parsing of FIGS. 14 to 22, the reception method of FIG. 24, and the like.

Referring to FIG. 1, the transmission method may include encoding point cloud data and transmitting a bitstream containing the point cloud data.

Referring to FIG. 12, regarding motion estimation, the transmission method may further include estimating, from a reference frame for a current frame containing the point cloud data, global motion information or local motion information for the current frame.

Referring to FIGS. 11 to 12, regarding the transform of residuals through the occupancy tree, the encoding of the point cloud data may include encoding geometry of the point cloud data, and encoding an attribute of the point cloud data, wherein the encoding of the geometry may include representing the geometry as a tree including at least one node and at least one child node of the at least one node, searching for neighbor nodes for a current node based on the tree, and calculating an occupancy index of the current node from an occupancy bit related to the tree. The occupancy tree or octree may include a parent (upper) node and child (lower) nodes configured by subdividing the parent node from the root node to the leaf node. The point occupancy status of each node is represented as occupancy information.

Referring to FIGS. 11 to 12, regarding the transform of secondary residuals of the occupancy tree, the encoding of the geometry may include generating and transforming a difference between the occupancy index and a reference occupancy index for the occupancy index. The reference occupancy index may be calculated from an occupancy bit of the tree of a reference frame for a current frame for the current node.

Referring to FIGS. 11 to 12, regarding the transform of residuals of the prediction tree or predictive tree, the encoding of the point cloud data may include encoding geometry of the point cloud data, and encoding an attribute of the point cloud data. The encoding of the geometry may include generating a predictive tree including a node containing the geometry and a child node for the node, generating a predicted value for a current node based on the predictive tree, and generating a residual between the geometry of the current node and the predicted value. Compared to the occupancy tree, the predictive tree is generated from the root to the leaf by finding the most similar node (point) to the current node and connecting the same to a child node for the current node.

Prediction-based compression may be defined as a process of defining a vertex (point) to be compressed (for example, a specific point in a point cloud set including points serving as a parent, a grandparent, a grand-grandparent, and the like) as a child, defining a vertex (point) to be predicted as a parent, and creating a parent-child relationship. For example, the root vertex is defined as the starting point of compression of the predictive tree, and a child taking the root as the parent is defined. To find the predicted value for the n-th vertex, the predicted value having the highest similarity (i.e., minimizing the error, which is a difference value) is found from the parent, grandparent, and grand-grandparent of the n-th vertex.

Referring to FIGS. 11 to 12, regarding the secondary transform of residuals of the predictive tree, the encoding of the geometry may further include generating and transforming a difference between the residual and a reference residual for the residual, wherein the reference residual may be calculated from the predictive tree of a reference frame for a current frame for the current node.

Referring to FIGS. 11 to 12, regarding secondary residual transform of predicting/lifting transform, the encoding of the point cloud data may include encoding geometry of the point cloud data, and encoding an attribute of the point cloud data, wherein the encoding of the attribute may include splitting, predicting, and updating the attribute, and generating and transforming a difference between a residual related to the attribute according to a prediction mode and a residual generated by another mode. Besides the difference between inter-frame residuals, a difference between residuals of prediction modes may be generated and transformed to transmit a bitstream.

Referring to FIGS. 14 to 17, regarding parameters (signaling) such as the SPS, TPS, GPS, and APS, the bitstream may contain a sequence parameter set including information indicating whether a difference between residuals of geometry is generated and transformed, and information indicating whether a difference between residuals of an attribute is generated and transformed. The bitstream may contain a tile parameter set including information indicating whether the difference between the residuals of the geometry is generated and transformed, and information indicating whether the difference between the residuals of the attribute is generated and transformed. The bitstream may contain a geometry parameter set including information indicating whether the difference between the residuals of the geometry is generated and transformed, or an attribute parameter set including information indicating whether the difference between the residuals of the attribute is generated and transformed.

Referring to FIGS. 18 to 20, regarding the geometry data unit (GDU), geometry data unit header (GDUH), occupancy tree, and predictive tree, the bitstream may contain a geometry data unit including geometry tree type information. The geometry tree type information may include a first value indicating that geometry is encoded based on an occupancy tree, and a second value indicating that an attribute is encoded based on a predictive tree. The bitstream may contain a geometry data unit header including information indicating whether a difference between residuals of geometry is generated and transformed. The bitstream may contain a data unit. The data unit may include an occupancy tree having a value obtained by transforming the difference between the residuals of the geometry. The data unit may include a predictive tree having a value obtained by transforming the difference between the residuals of the geometry.

Referring to FIGS. 21 to 22, regarding the attribute data unit (ADU), attribute data unit header (ADUH), and attribute coefficient (attr_coeff), the bitstream may contain an attribute data unit including attribute coding type information, the attribute coding type information including a first value indicating region adaptive hierarchical transform (RAHT), a second value indicating a Level of Detail (LoD) with prediction transform, a third value indicating an LoD with lifting transform, and a fourth value indicating raw attribute data. The bitstream may contain an attribute data unit header including information indicating whether a difference between residuals related to an attribute is generated and transformed, or a data unit including attribute coefficient information, the attribute coefficient information including a value obtained by transforming the difference between the residuals related to the attribute.

The point cloud data transmission method may be performed by a transmission device. The transmission device may include a memory and a processor. The processor may perform an encoding operation. Additionally, referring to FIG. 12, the transmission device may include an encoder configured to encode point cloud data, and a transmitter configured to transmit a bitstream containing the point cloud data.

The point cloud data transmission device or the processor of the transmission device may further include a motion compensator configured to estimate, from a reference frame for a current frame containing the point cloud data, global motion information or local motion information for the current frame. The encoder may perform operations including encoding geometry of the point cloud data, and encoding an attribute of the point cloud data. The encoding of the geometry may include representing the geometry as a tree including at least one node and at least one child node of the at least one node, searching for neighbor nodes for a current node based on the tree, and calculating an occupancy index of the current node from an occupancy bit related to the tree.

The reception method corresponds to the reverse process to the operations of the point cloud data transmission method. Referring to FIG. 13, the reception method may include receiving a bitstream containing point cloud data, and decoding the point cloud data.

Referring to FIG. 13, the decoding may include estimating, from a reference frame for a current frame containing the point cloud data, global motion information or local motion information for the current frame, performing arithmetic decoding on the point cloud data, inversely transforming a difference between residuals of geometry of the point cloud data, and inversely transforming a difference between residuals of an attribute of the point cloud data. The bitstream may contain information indicating whether the difference between the residuals of the geometry is generated and transformed, and information indicating whether the difference between the residuals of the attribute is generated and transformed.

The reception method may be performed by a reception device. The reception device may include a memory and a processor. The processor may perform a decoding operation. Additionally, referring to FIG. 13, the reception device may include a receiver configured to receive a bitstream containing point cloud data, and a decoder configured to decode the point cloud data.

The decoder or processor receives the bitstream and performs intra-frame or inter-frame decoding. For the inter-frame decoding, it generates global or local motion estimation information and performs motion compensation. For the geometry and/or attributes that are motion-compensated between frames, the values obtained through the secondary residual transform are inversely transformed to reconstruct the residuals, similar to the transmission side. The geometry and/or attributes are then reconstructed based on the residuals. For the geometry, the secondary residuals (differences between residuals) are inversely transformed based on the occupancy tree or predictive tree, and the geometry is decoded by summing the residuals. For the attributes, the secondary residuals (differences between residuals) are inversely transformed based on the lifting/predicting technique, and the attributes are decoded by summing the residuals.

According to embodiments, the compression efficiency of the geometry and attributes of a point cloud may be increased. Existing geometry and attribute residuals have limitations in sufficiently reducing residuals due to entropy coding after one-dimensional transform. According to the embodiments, inter-frame compression efficiency may be increased by applying secondary transform according to the characteristics of a point cloud.

The operations according to the embodiments described above may be performed by the transmission device and/or reception device according to the embodiments. The transmission/reception device may include a transmitter/receiver configured to transmit/receive media data, a memory storing instructions (program code, algorithms, flowcharts, and/or data) for the processes according to the embodiments, and a processor configured to control the operations of the transmission/reception device.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

**Claims**

1. A method of transmitting point cloud data, the method comprising:

   encoding point cloud data; and
   transmitting a bitstream containing the point cloud data.

2. The method of claim 1, further comprising:
   estimating, from a reference frame for a current frame containing the point cloud data, global motion information or local motion information for the current frame.

3. The method of claim 1, wherein the encoding of the point cloud data comprises:

   encoding geometry of the point cloud data; and
   encoding an attribute of the point cloud data,
   wherein the encoding of the geometry comprises:

representing the geometry as a tree including at least one node and at least one child node of the at least one node;

searching for neighbor nodes for a current node based on the tree; and

calculating an occupancy index of the current node from an occupancy bit related to the tree.

4. The method of claim 3, wherein the encoding of the geometry comprises:

generating and transforming a difference between the occupancy index and a reference occupancy index for the occupancy index,

wherein the reference occupancy index is calculated from an occupancy bit of the tree of a reference frame for a current frame for the current node.

5. The method of claim 1, wherein the encoding of the point cloud data comprises:

encoding geometry of the point cloud data; and

encoding an attribute of the point cloud data,

wherein the encoding of the geometry comprises:

generating a predictive tree including a node containing the geometry and a child node for the node;

generating a predicted value for a current node based on the predictive tree; and

generating a residual between the geometry of the current node and the predicted value.

6. The method of claim 5, wherein the encoding of the geometry further comprises:

generating and transforming a difference between the residual and a reference residual for the residual,

wherein the reference residual is calculated from the predictive tree of a reference frame for a current frame for the current node.

7. The method of claim 1, wherein the encoding of the point cloud data comprises:

encoding geometry of the point cloud data; and

encoding an attribute of the point cloud data,

wherein the encoding of the attribute comprises:

splitting, predicting, and updating the attribute; and

generating and transforming a difference between a residual related to the attribute according to a prediction mode and a residual generated by another mode.

8. The method of claim 1, wherein the bitstream contains:

a sequence parameter set comprising:

information indicating whether a difference between residuals of geometry is generated and transformed; and

information indicating whether a difference between residuals of an attribute is generated and transformed;

a tile parameter set comprising:

information indicating whether the difference between the residuals of the geometry is generated and transformed; and

information indicating whether the difference between the residuals of the attribute is generated and transformed;

a geometry parameter set comprising information indicating whether the difference between the residuals of the geometry is generated and transformed; or

an attribute parameter set comprising information indicating whether the difference between the residuals of the attribute is generated and transformed.

9. The method of claim 1, wherein the bitstream contains:

a geometry data unit comprising geometry tree type information comprising:

a first value indicating that geometry is encoded based on an occupancy tree; and

a second value indicating that an attribute is encoded based on a predictive tree;

a geometry data unit header comprising information indicating whether a difference between residuals of geometry is generated and transformed;

a data unit comprising an occupancy tree or a predictive tree, the occupancy tree or predictive tree having a value obtained by transforming the difference between the residuals of the geometry.

10. The method of claim 1, wherein the bitstream contains:

an attribute data unit comprising attribute coding type information, the attribute coding type information comprising:

a first value indicating region adaptive hierarchical transform (RAHT);

a second value indicating a Level of Detail (LoD) with prediction transform;

a third value indicating an LoD with lifting transform, and

a fourth value indicating raw attribute data;

an attribute data unit header comprising information indicating whether a difference between residuals related to an attribute is generated and transformed; or

a data unit comprising attribute coefficient information, the attribute coefficient information comprising a value obtained by transforming the difference between the residuals related to the attribute.

11. A device for transmitting point cloud data, comprising:

an encoder configured to encode point cloud data; and

a transmitter configured to transmit a bitstream containing the point cloud data.

12. The device of claim 11, further comprising:

a motion compensator configured to estimate, from a reference frame for a current frame containing the point cloud data, global motion information or local motion information for the current frame,

wherein the encoder performs operations comprising:

encoding geometry of the point cloud data; and

encoding an attribute of the point cloud data,

wherein the encoding of the geometry comprises:

representing the geometry as a tree including at least one node and at least one child node of the at least one node;

searching for neighbor nodes for a current node based on the tree; and

calculating an occupancy index of the current node from an occupancy bit related to the tree.

13. A method of receiving point cloud data, the method comprising:

receiving a bitstream containing point cloud data; and

decoding the point cloud data.

14. The method of claim 13, wherein the decoding comprises:

estimating, from a reference frame for a current frame containing the point cloud data, global motion information or local motion information for the current frame;

performing arithmetic decoding on the point cloud data;

inversely transforming a difference between residuals of geometry of the point cloud data; and

inversely transforming a difference between residuals of an attribute of the point cloud data,

wherein the bitstream contains:

information indicating whether the difference between the residuals of the geometry is generated and transformed; and

information indicating whether the difference between the residuals of the attribute is generated and transformed.

15. A device for receiving point cloud data, comprising:

a receiver configured to receive a bitstream containing point cloud data; and
a decoder configured to decode the point cloud data.

# FIG. 1

| | |
|---|---|
| 10000 | **TRANSMISSION DEVICE** |
| 10001 | Point Cloud Video Acquisition |
| 10002 | Point Cloud Video Encoder |
| 10003 | Transmitter (Communication module) |

(Compressed) Bitstream

| | |
|---|---|
| **RECEPTION DEVICE** | 10004 |
| Renderer | 10007 |
| Point Cloud Video Decoder | 10006 |
| Receiver (Communication module) | 10005 |

Feedback Information

# FIG. 2

# FIG. 3

positions

attributes

| 30000 | Transform coordinates |
|---|---|

| 30001 | Quantize and remove points (voxelize) |

| 30002 | Analyze octree |

| 30003 | Analyze surface approximation |

| 30005 | Reconstruct geometry |

| 30004 | Arithmetic encode |

Transform colors — 30006

Transfer attributes — 30007

— 30008

RAHT

Gnnerate LOD — 30009

Lifting — 30010

Quantize coefficients — 30011

Arithmetic encode — 30012

geometry bitstream

atribute bitstream

# FIG. 4

# FIG. 5

Level of details

# FIG. 6

| | |
|---|---|
| Original order | P0, P1, P2, P3, P4, P5, P6, P7, P8, P9 |

| | |
|---|---|
| LOD-based order | P0, P5, P4, P2 \| P1, P6, P3 \| P9, P8, P7 |

LOD0

LOD1

LOD2

# FIG. 7

geomerty
bitstream

attributes
birsrteam

7000 — Arithmerix decode

7001 — Synthesize octree

7002 — synthesize surface approximation

7003 — Reconstruct geometry

7004 — Inverse transform coordinates

position

7005 — Arithmerix decode

7006 — Inverse quantize

7007

RAHT

Gnnerate LOD — 7008

Inverse lifring — 7009

Inverse transform colors — 7010

attributes

# FIG. 8

```
                        ┌──────────────────┐      8007
            8000   ───  │  Data input unit │
                        └──────────────────┘
        Position values of points                 Attribute values of points
                           Set value, etc.
┌──────────────────────┐   ┌────────────┐   ┌────────────────────────┐
│ Quantization processor│   │  Metadata  │   │ Color transform processor│  8008
│                       │   │  processor │   │                          │
└──────────────────────┘   └────────────┘   └────────────────────────┘
  8001

┌──────────────────────┐                     ┌────────────────────────┐
│ Voxelization processor│                    │Attribute transform processor│ 8009
└──────────────────────┘                     └────────────────────────┘
  8002

┌──────────────────────┐                     ┌────────────────────────┐
│  Octree occupancy    │                     │ Predicting/lifting/RAHT │  8010
│  code generator      │                     │  transform processor    │
└──────────────────────┘                     └────────────────────────┘
  8003

┌──────────────────────┐                     ┌────────────────────────┐
│ Surface model processor│                   │    Arithmetic coder    │   8011
└──────────────────────┘                     └────────────────────────┘
  8004

┌──────────────────────┐
│Intra/inter-coding processor│
└──────────────────────┘
  8005

┌──────────────────────┐
│   Arithmetic coder   │
└──────────────────────┘
  8006
        Sharing reconstructed position values

                        ┌────────────────────────┐
            8012   ───  │ Transmission processor │
                        └────────────────────────┘
                             Transmission
```

# FIG. 9

9000 — Receiver

9001 — Reception processor

9006

Geometry bitstream

Attribute bitstream

Set value, etc.

9002 — Arithmetic decoder

Metadata parser

Arithmetic decoder — 9007

9003 — Occupancy code-based octree reconstruction processor

Inverse quantization processor — 9008

9004 — Surface model processor (triangle reconstruction, up-sampling, voxelization)

Predicting/lifting/RAHT inverse transform processor — 9009

9005 — Inverse quantization processor

Color inverse transform processor — 9010

Sharing reconstructed position values

Renderer — 9011

# FIG. 10

FIG. 11

Level 0 (TOP)

Level 1

Level 2

. . .

Level n (LEAVES)

FIG. 12

```
                          ┌─────────────────┐
                          │ Data input unit │
                          └────────┬────────┘
   (I frame)                       │              (P / B frame)
      ┌───────────────────────────┼──────────────────────────┐
      │                           │                      ┌────▶◀────┐
      ▼                           │                      ▼
┌──────────────┐         ┌────────────────┐   ┌──────────────────────┐
│ Intra-frame  │         │                │   │   Global/local motion │
│   encoder    │         │                │   │ estimation & compensation │
└──────┬───────┘         │     Frame      │   └──────────┬───────────┘
       │                 │ reconstruction │     Geometry  │  Attribute
       ▼                 │                │      ┌────────┴────────┐
 I frame bitstream       │                │      ▼                 ▼
                         │                │ ┌──────────────┐ ┌────────────────────┐
                         │                │ │Octree occupancy│ │Predicting/Lifting/RAHT│
                         └────────────────┘ │code generator │ │ transform processor │
                                            └──────┬───────┘ └─────────┬──────────┘
                                            ┌──────▼───────┐ ┌─────────▼──────────┐
                                            │Secondary residual│→│Secondary residual │
                                            │transform processor│ │transform processor│
                                            └──────────────┘ └────────────────────┘
                                                      │
                                                ┌─────▼──────┐
                                                │Arithmetic coder│
                                                └─────┬──────┘
                                                      ▼
                                              P/B frame bitstream
```

FIG. 13

```
                            ┌─────────────────┐
                            │    Receiver     │
                            └─────────────────┘

    I frame bitstream                    P / B frame bitstream

  ┌──────────────────┐   ┌──────────────┐   ┌──────────────────────────────┐
  │ Intra-frame      │   │              │   │ Global/local motion          │
  │ decoder          │   │   Frame      │   │ compensation                 │
  └──────────────────┘   │ reconstruction│  └──────────────────────────────┘
                         │              │
  I frame position values│              │   ┌──────────────────────────────┐
  & attribute values     │              │   │     Arithmetic coder         │
                         └──────────────┘   └──────────────────────────────┘
```

| Secondary residual inverse transform processor | Secondary residual inverse transform processor |
|---|---|
| Occupancy code-based octree reconstruction processor | Predicting/Lifting/RAHT transform processor |

Position values          Attribute values

P/B frame position values
& attribute values

FIG. 14

slice 0

slice n

SPS | GPS | APS0 | APS1 | TPS | $\text{Geom}_0^0$ | $\text{Attr}_0^0$ | $\text{Attr}_1^0$ | $\cdots$ | $\text{Geom}_0^n$ | $\text{Attr}_0^n$ | $\text{Attr}_1^n$

|Geom_slice_header| Geom_slice_data|

```
Tile(0).tile_bounding_box_xyz0;
Tile(0).tile_bounding_box_whd;
Tile(n).tile_bounding_box_xyz0;
Tile(n).tile_bounding_box_whd;
```

```
geom_geom_parameter_set_id;
geom_tile_id;
geom_slice_id;
geomBoxOrigin;
geom_box_log2_scale;
geom_max_node_size_log2;
geom_num_points;
```

FIG. 15

| seq_parameter_set_rbsp( ) { | Descriptor |
|---|---|
| ... | |
|   geom_secondary_residual_transform | u(1) |
|   attr_secondary_residual_transform | u(1) |
| ... | |
| } | |

FIG. 16

| tile_parameter_set( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| tile_bounding_box_offset_z[ i ] | se(v) |
| tile_bounding_box_scale_factor[ i ] | ue(v) |
| tile_bounding_box_size_width[ i ] | ue(v) |
| tile_bounding_box_size_height[ i ] | ue(v) |
| } | |
| geom_secondary_residual_transform | u(1) |
| attr_secondary_residual_transform | u(1) |
| } | |

FIG. 17

| Geometry_parameter_set( ) { | Descriptor |
|---|---|
| ... | |
| geom_secondary_residual_transform | u(1) |
| ... | |
| } | |

| attribute_parameter_set( ) { | Descriptor |
|---|---|
| ... | |
| attr_secondary_residual_transform | u(1) |
| ... | |
| } | |

FIG. 18

| geometry_data_unit( { | Descriptor |
|---|---|
| geometry_data_unit_header( ) | |
| if( geom_tree_type == 0 ) | |
| occupancy_tree( ) | |
| else if( geom_tree_type == 1 ) | |
| predictive_tree( ) | |
| geometry_data_unit_footer( ) | |
| } | |

| geometry_data_unit_header( ) { | Descriptor |
|---|---|
| ... | |
| geom_secondary_residual_transform | u(1) |
| ... | |
| } | |

FIG. 19

| occupancy_tree( { | Descriptor |
|---|---|
| ... | |
|   for(...) { | |
|     occupancy_tree_level(Dpth) | |
| ... | |
| | |
|     } | |
| } | |
| occupancy_tree_level(dpth) { | |
|   ... | |
|   for(NodeIdx = 0; NodeIdx < OccNodeCnt[dpth]; NodeIdx++) | |
|     occupancy_tree_node(dpth, NodeIdx) | |
| } | |
| occupancy_tree_node(dpth, nodeIdx) { | |
|   if(geom_secondary_residual_transform) { | |
|     occupancy_idx_difference | ae(v) |
|     } | |
|     ... | |
|   } | |

FIG. 20

| predictive_tree( { | Descriptor |
|---|---|
|   PtnCnt = 0 | |
|   do { | |
|     predictive_tree_node(, PtnCnt) | |
|     ptree_end_of_slice | ae(v) |
|   } while(ptree_end_of_slice) | |
| } | |
| predictive_tree_node(dpth, nodeIdx) { | Descriptor |
|   PtnCnt++ | |
|   ... | |
|   if(geom_secondary_residual_transform) { | |
|     ptn_residual_difference [nodeIdx] | ae(v) |
|   } | |
|   ... | |
|   for(i = 0; i < (ptn_child_cnt_xor1[nodeIdx] ^ 1); i++ | |
|     predictive_tree_node(dpth + 1, PtnCnt) | |
| } | |

FIG. 21

| attribute_data_unit( { | Descriptor |
|---|---|
| attribute_data_unit_header( ) | |
| if(attr_coding_type ≠ 3 | |
| attribute_coeffs( ) | |
| else | |
| attribute_raw( ) | |
| byte_alignment( ) | |
| } | |

| attr_data_unit_header( ) { | Descriptor |
|---|---|
| ... | |
| attr_secondary_residual_transform | u(1) |
| ... | |
| } | |

FIG. 22

| attribute_coeffs( { | Descriptor |
|---|---|
|    for(i = 0; i < PointCnt; i++ { | |
|      ... | |
|     if(i < PointCnt) | |
|       attribute_coeff_tuple(i) | |
|     } | |
|  } | |
| attribute_coeff_tuple(coeffIdx) { | |
|    for(c = 0, inferLastComp = 1; c < AttrDim; c++ { | |
|     if(attr_secondary_residual_transform) { | |
|       coeff_abs_difference[c] | ae(v) |
|      ... | |
| | |
|     inferLastComp &= coeff_abs[c] == 0 | |
|     } | |
|  } | |

FIG. 23

```
                                              ┌─ S2300
┌─────────────────────────────────┐
│      Encode point cloud data    │
└─────────────────────────────────┘
                 │
                 ▼                    ┌─ S2301
┌─────────────────────────────────┐
│       Transmit bitstream        │
│   containing point cloud data   │
└─────────────────────────────────┘
```

FIG. 24

S2400

| Receive bitstream containing point cloud data |
| --- |

S2401

| Decode point cloud data |
| --- |

## INTERNATIONAL SEARCH REPORT

| International application No. |
|---|
| **PCT/KR2023/012394** |

### A. CLASSIFICATION OF SUBJECT MATTER

**H04N 19/60**(2014.01)i; **H04N 19/13**(2014.01)i; **H04N 19/597**(2014.01)i; **H04N 19/184**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/60(2014.01); G06T 9/00(2006.01); G06T 9/40(2006.01); H04N 19/103(2014.01); H04N 19/105(2014.01); H04N 19/176(2014.01); H04N 19/597(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 부호화(encoding), 복호화(decoding), 비트스트림 (bitstream), 전역(global), 지역(local), 움직임(motion)

### C. DOCUMENTS CONSIDERED TO BE RELEVANT

| Category* | Citation of document, with indication, where appropriate, of the relevant passages | Relevant to claim No. |
|---|---|---|
| X | WO 2022-050650 A1 (LG ELECTRONICS INC.) 10 March 2022 (2022-03-10)<br>See paragraphs [0067], [0091], [0111], [0166], [0185]-[0194], [0305], [0309], [0335], [0374], [0399], [0417]-[0422], [0442]-[0444], [0504], [0523]-[0524] and [0532]; claims 1 and 11; and figures 6, 20, 22 and 27-29. | 1-6,11-15 |
| Y | | 7-10 |
| Y | KR 10-2021-0136082 A (TENCENT AMERICA LLC) 16 November 2021 (2021-11-16)<br>See paragraphs [0027], [0042], [0045], [0076]-[0077], [0083] and [0101]. | 7-10 |
| X | KR 10-2022-0077097 A (HYUNDAI MOTOR COMPANY et al.) 08 June 2022 (2022-06-08)<br>See paragraph [0018]. | 1,11,13,15 |
| X | KR 10-2022-0027882 A (GUANGDONG OPPO MOBILE TELECOMMUNICATIONS CORP., LTD.) 08 March 2022 (2022-03-08)<br>See paragraphs [0041]-[0042] and [0248]; and figure 1. | 1,11,13,15 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 November 2023** | **30 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/012394**

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0144880 A (TENCENT AMERICA LLC) 30 November 2021 (2021-11-30)<br>See paragraphs [0021] and [0070]-[0072]. | 1,11,13,15 |

Form PCT/ISA/210 (second sheet) (July 2022)

**INTERNATIONAL SEARCH REPORT**
Information on patent family members

International application No.

**PCT/KR2023/012394**

| Patent document cited in search report | | | Publication date (day/month/year) | Patent family member(s) | | | Publication date (day/month/year) |
|---|---|---|---|---|---|---|---|
| WO | 2022-050650 | A1 | 10 March 2022 | US | 2023-0290006 | A1 | 14 September 2023 |
| KR | 10-2021-0136082 | A | 16 November 2021 | CN | 113795870 | A | 14 December 2021 |
| | | | | EP | 4042376 | A1 | 17 August 2022 |
| | | | | JP | 2022-535484 | A | 09 August 2022 |
| | | | | JP | 7213368 | B2 | 26 January 2023 |
| | | | | US | 11284111 | B2 | 22 March 2022 |
| | | | | US | 2021-0112276 | A1 | 15 April 2021 |
| | | | | WO | 2021-071753 | A1 | 15 April 2021 |
| KR | 10-2022-0077097 | A | 08 June 2022 | CN | 116530085 | A | 01 August 2023 |
| | | | | EP | 4254957 | A1 | 04 October 2023 |
| | | | | US | 2023-0300382 | A1 | 21 September 2023 |
| | | | | WO | 2022-119303 | A1 | 09 June 2022 |
| KR | 10-2022-0027882 | A | 08 March 2022 | CN | 114363634 | A | 15 April 2022 |
| | | | | EP | 3993424 | A1 | 04 May 2022 |
| | | | | JP | 2022-540569 | A | 16 September 2022 |
| | | | | JP | 7330306 | B2 | 21 August 2023 |
| | | | | US | 11412259 | B2 | 09 August 2022 |
| | | | | US | 2022-0124371 | A1 | 21 April 2022 |
| | | | | US | 2022-0329858 | A1 | 13 October 2022 |
| | | | | WO | 2021-000205 | A1 | 07 January 2021 |
| KR | 10-2021-0144880 | A | 30 November 2021 | CN | 113796014 | A | 14 December 2021 |
| | | | | EP | 4128540 | A1 | 08 February 2023 |
| | | | | JP | 2022-530765 | A | 01 July 2022 |
| | | | | JP | 7330291 | B2 | 21 August 2023 |
| | | | | US | 11317117 | B2 | 26 April 2022 |
| | | | | US | 2021-0306664 | A1 | 30 September 2021 |
| | | | | US | 2022-0210472 | A1 | 30 June 2022 |
| | | | | WO | 2021-202003 | A1 | 07 October 2021 |

Form PCT/ISA/210 (patent family annex) (July 2022)